# EUROPÄISCHE PATENTSCHRIFT

(11) **EP 2 381 118 B1**
(45) Veröffentlichungstag und Bekanntmachung des Hinweises auf die Patenterteilung: **05.06.2013**
(21) Anmeldenummer: 11003313.1
(22) Anmeldetag: 20.04.2011
(51) Int. Cl.: F16C 29/06, F16C 29/10, F16D 63/00, F16D 65/14

(54) **Bremsvorrichtung mit verschiedenen Getrieben und Funktionsablauf der Vorrichtung**
Braking device with different drives and functional process of the device
Dispositif de freinage doté d'engrenages différents et processus de fonctionnement du dispositif

(30) Priorität: 22.04.2010 DE 102010018183
(43) Veröffentlichungstag der Anmeldung: 26.10.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1- 10 225 353
- DE-A1- 19 805 449
- US-A- 3 986 584
- US-A1- 2005 183 907

## Beschreibung

Die Erfindung betrifft eine Vorrichtung und deren Funktionsablauf zum Bremsen, Klemmen oder Greifen mit mindestens einem ersten und mindestens einem zweiten, jeweils eine Hub- oder Schwenkbewegung erzeugenden Antrieb, wobei jeder Antrieb mindestens eine Antriebsvorrichtung und mindestens ein Schiebekeilgetriebe umfasst.

Vorrichtungen wie beispielsweise Brems- und/oder Klemmvorrichtungen mit jeweils mehr als einem pneumatischen oder hydraulischen Antrieb werden in der Regel immer so angesteuert, dass alle Antriebe einer Vorrichtung einen vergleichbaren Aufbau haben und zudem zumindest annähernd zeitgleich betätigt werden.

Dies zeigen z.B. Vorrichtungen, wie sie u.a. aus der DE 102 07 605 bekannt sind.

Der vorliegenden Erfindung liegt die Problemstellung zugrunde, eine Vorrichtung mit mindestens zwei Antrieben zu entwickeln, die bei großen Klemmkräften einen einfachen und Bauraum sparenden Aufbau hat und zudem dauerhaft wartungsarm ist.

Diese Problemstellung wird mit den Merkmalen des Anspruchs 1 gelöst. Dazu hat das Getriebe des ersten Antriebs - zur Erzeugung einer Zustellbewegung - eine kleine Übersetzung, während das Getriebe des zweiten Antriebs - zur Erzeugung einer großen Brems-, Klemm- oder Greifkraft - eine um mindestens 33 Prozent größere Übersetzung hat. Der erste Antrieb ist vor dem zweiten Antrieb betätigbar.

Die Problemstellung wird ferner mit den Merkmalen des Anspruchs 9 gelöst. Dabei hat das Getriebe des ersten Antriebs eine Übersetzung, die kleiner ist als die Übersetzung des Getriebes eines weiteren Antriebs. Mindestens einer der weiteren Antriebe beginnt mit der Brems-, Klemm- oder Greifbewegung erst dann, wenn der erste Antrieb seine Brems-, Klemm- oder Greifbewegung zu mindestens 60 Prozent bewältigt hat. Alle Antriebe werden nach dem Erzeugen der Brems-, Klemm- oder Greifkraft und während des Haltens derselben entweder zeitgleich mit Energie versorgt oder zeitgleich abgeschaltet.

Mit der Erfindung wird eine Vorrichtung und deren Funktionsweise vorgestellt, die eine stufenweise arbeitende Brems-, Klemm- oder Greifbewegung ermöglicht. Ein erster Antrieb sorgt zunächst für ein Anlegen der Brems- und/oder Klemmelemente an einer Führungsschiene. Dabei wird das Spiel zumindest großteils verbraucht, das bei einer offenen, unbetätigten Klemmung zwischen den Brems- oder Klemmelementen und der entsprechenden Führungsschiene vorhanden ist. In einem zweiten Schritt wird mit einem weiteren Antrieb die eigentliche Brems- oder Klemmkraft erzeugt. Da für diesen Antrieb ein langer Zustellweg entfällt, lässt sich mit diesem problemlos eine große Kraftübersetzung realisieren. In den Ausführungsbeispielen werden als Getriebe unterschiedliche Schiebekeilgetriebe verwendet. Zur Umsetzung der verschiedenen Übersetzungen erhält der erste Antrieb ein Schiebekeilgetriebe mit großem Keilwinkel, während in den zweiten Antrieb ein Schiebekeilgetriebe eingebaut wird, das einen kleineren Keilwinkel aufweist. Durch die Keilgetriebe wird die Antriebskraft der entsprechenden Antriebsvorrichtung, z.B. einer Zylinder-Kolben-Einheit, eines Elektromagnetes oder eines Elektromotors, durch die entsprechende Übersetzung verstärkt.

Ein Antrieb einer anderen Vorrichtung besteht z.B. aus einer Zylinder-Kolben-Einheit, die über eine Zahnstange eine Exzenterscheibe schwenkt. Die Exzenterscheibe wirkt dann z.B. auf die Teile einer Klemmung. Der erste Antrieb hat dazu eine Exzenterscheibe mit großer Steigung, während der zweite Antrieb mit einer Exzenterscheibe kleinerer Steigung auskommt.

Bei einer weiteren Antriebsvariante wird pro Antrieb eine Kombination aus Elektromotor und Gewindespindel verwendet. Die Gewindespindel des ersten Antriebs hat eine große Steigung, während die des zweiten Antriebs eine kleine Steigung hat. Die entsprechenden Muttern der Gewindespindeln tragen hier die Klemm- oder Greifelemente.

Es ist auch eine Variante mit mindestens einem Kniehebelantrieb denkbar. Hier bewegt der erste Antrieb mittels einer Antriebsvorrichtung zwei anfangs ein Knie bildende Hebel, die am Ende der Antriebsbewegung in eine blockierende Strecklage übergehen. Der zweite Antrieb hat beispielsweise ein anderes Getriebe, mit dessen Hilfe eine größere Übersetzung erzielt werden kann. Wie in dieser Variante können pro Vorrichtung grundsätzlich verschiedene Getriebearten und verschiedene Antriebsvorrichtungen verwendet werden.

Ist die Vorrichtung eine Greifvorrichtung mit z.B. drei Greifarmen, ist es denkbar, einen Greifarm ortsfest zu halten, während ein zweiter Greifarm über den ersten Antrieb eine große Zustellbewegung durchführt. Ein dritter Greifarm wird nur zum Aufbringen der Greifkraft betätigt. Mit solchen Vorrichtungen ist es auch möglich, mit einem ersten Greifarm eines ersten Antriebs über z.B. 66 Prozent des Zustellhubs durchzuführen und mit einem zweiten Greifarm eines zweiten Antriebs z.B. 33 Prozent des Zustellhubs zu verfahren. Der dritte Greifarm bewirkt über einen dritten Antrieb die restliche Zustellung und die notwendige Greifkrafterzeugung.

Alle Klemm- und Greifelemente, die relativ zur Vorrichtung und/oder relativ zueinander bewegt werden, können die Klemm- und Greifkräfte durch ein sich aufeinander zubewegen oder durch eine Spreizbewegung erzeugen. Eine Spreizbewegung ist z.B. dann erforderlich, wenn sich die Greifelemente an der Innenwandung einer Bohrung des zu greifenden Werkstücks anlegen sollen.

Weitere Einzelheiten der Erfindung ergeben sich aus den Unteransprüchen und der nachfolgenden Beschreibung mindestens einer schematisch dargestellten Ausführungsform.
- Figur 1:: Perspektivische Ansicht einer pneumatisch betätigbaren Klemmvorrichtung;
- Figur 2:: Perspektivische Ansicht einer elektromagnetisch betätigbaren Klemmvorrichtung;
- Figur 3:: horizontaler Längsschnitt der unbetätigten Klemmvorrichtung;
- Figur 4:: wie Figur 3, jedoch betätigt;
- Figur 5:: vertikaler Längsschnitt durch den Zustellantrieb;
- Figur 6:: vertikaler Längsschnitt durch den Klemmantrieb;
- Figur 7:: vertikaler Querschnitt der Klemmvorrichtung;
- Figur 8:: horizontaler Längsschnitt auf der Höhe eines Zuschaltventils der unbetätigten Klemmvorrichtung mit Blick nach oben;
- Figur 9:: Längsschnitt durch ein betätigtes Zuschaltventil;
- Figur 10:: Längsschnitt durch ein entlüftendes Zuschaltventil;
- Figur 11:: Pneumatikschaltplan der Klemmvorrichtung nach Figur 1;
- Figur 12:: vertikaler Querschnitt zu der Klemmvorrichtung nach Figur 2;
- Figur 13:: horizontaler Teillängsschnitt durch eine unbetätigte Klemmvorrichtung mit elektromagnetischen Antrieben.

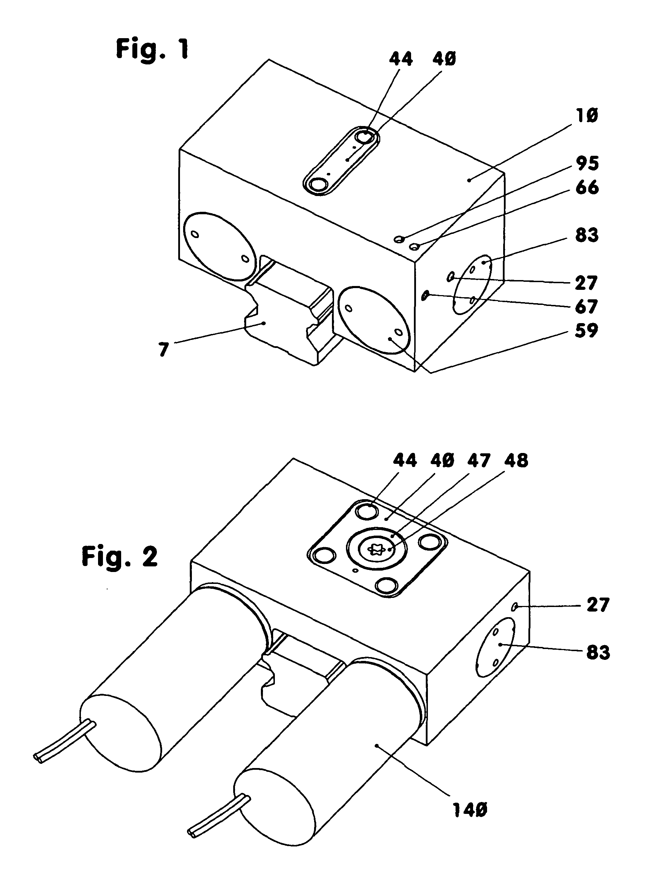

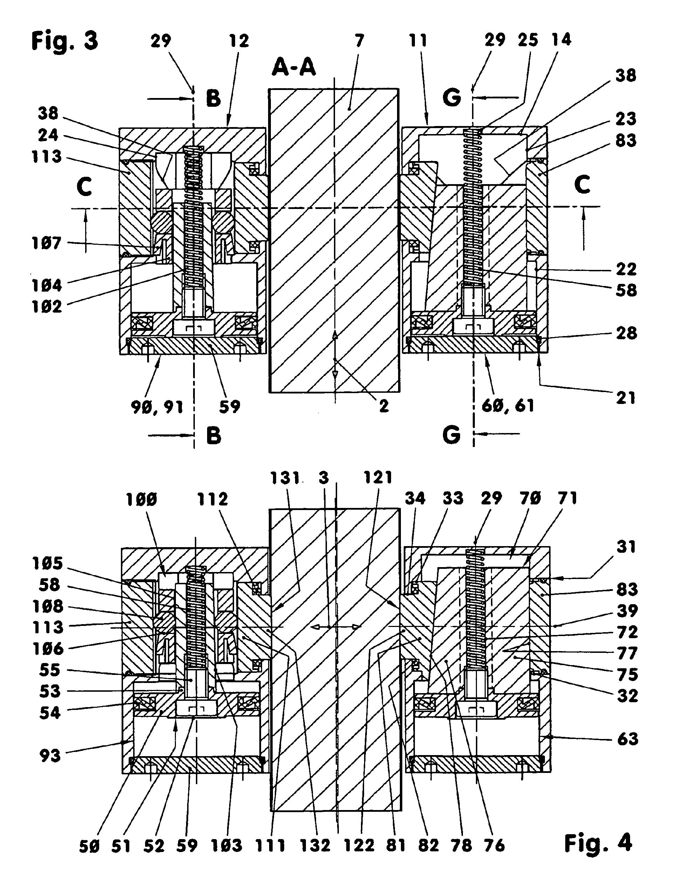

Die Figur 1 zeigt eine Klemm- und/oder Bremsvorrichtung, deren Reibgehemme (121, 131), vgl. Figuren 3 und 4, mittels zweier Antriebe (60, 90) betätigt werden. Die Vorrichtung umgreift mit ihrem c-förmigen Grundkörper (10) eine Führungsschiene (7). Im Grundkörper (10) befinden sich zwischen je einer einfach wirkenden Zylinder-Kolben-Einheit (50, 63; 50, 93) und einem Reibgehemme (121, 131) ein spezielles Schiebekeilgetriebe (70, 100).

Die Vorrichtung ist über den Grundkörper (10) an einem Schlitten (1) befestigt, der an der Führungsschiene (7) abgebremst oder geklemmt werden soll. Die Führungsschiene (7) verläuft parallel zur Schlittenbewegungsrichtung bzw. zur Führungslängsrichtung (2).

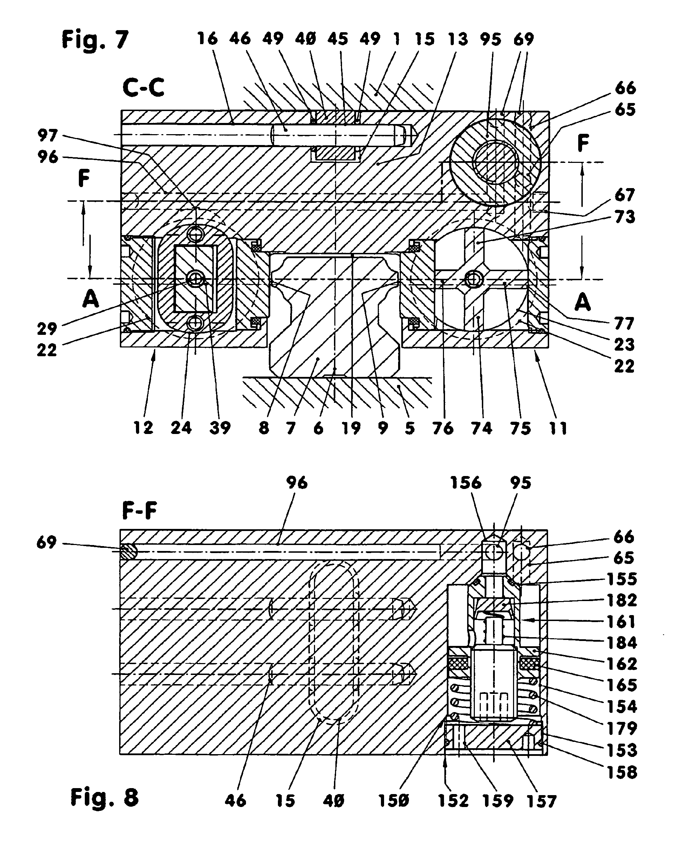

U.a. ist in der Figur 7 ein Abschnitt einer doppelprismatischen Führungsschiene (7) dargestellt. Die Führungsschiene (7) besteht aus einem Stab mit einem annähernd quaderförmigen Hüllquerschnitt, in den beidseitig je eine im Wesentlichen v-förmige Nut mit verbreitertem Nutgrund eingearbeitet ist. Die Führungsschiene (7) kontaktiert über ihre Bodenfläche z.B. das sie tragende Maschinenbett (5).

Die Führungsschiene (7) hat oberhalb der v-förmigen Nut u.a. zwei Nebenflächen (8, 9), die sich bezogen auf die vertikale Mittenlängsebene (6) spiegelbildlich gegenüber liegen. Beide Nebenflächen (8, 9) sind zueinander parallel ausgerichtet. Sie dienen den Reibbacken (122, 132) als Anlageflächen.

Der z.B. einteilige, aus 16 MnCr 5 gefertigte Grundkörper (10) ist im Wesentlichen ein quaderförmiges Bauteil, das an seiner Unterseite eine zentrale Nut (19) mit einem z.B. rechteckigen Querschnitt aufweist. In die Nut (19) taucht die Führungsschiene (7) nach Figur 7 zu ca. drei Vierteln ein. Der Grundkörper (10) hat beispielsweise folgende Abmessungen: 75 mm x 41 mm x 43 mm.

Das Gehäuse (10) hat eine rechte (11) und eine linke Gehäusezone (12). Beide Zonen (11, 12) befinden sich unterhalb einer Flanschzone (13).

In der Flanschzone (13) ist u.a. ein Vorrichtungsträger (40) gelagert. Der Vorrichtungsträger (40) hat nach den Figuren 1, 7 und 8 eine passfederartige Geometrie. Seine obere Adapterfläche weist zwei Gewindebohrungen (44) zur Befestigung an dem die Vorrichtung lagernden Schlitten (1) auf. Quer zu den Gewindebohrungen (44) hat er z.B. zwei Gleitbohrungen (45), die parallel zur Klemmrichtung (3) und zudem quer zur Führungslängsrichtung (2) orientiert sind.

In der Oberseite des Gehäuses (10) ist zur Lagerung des Vorrichtungsträgers (40) ein in Führungslängsrichtung (2) orientiertes Langloch (15) eingearbeitet, das von zwei Querbohrungen (16) geschnitten wird. Die in Klemmrichtung (3) gemessene Breite des Langloches (15) ist wie die in Führungslängsrichtung (2) gemessene Länge des Langloches (15) jeweils um z.B. 2 mm breiter bzw. länger als die entsprechende Ausdehnung des Vorrichtungsträgers (40), vgl. auch Figur 8.

Der Vorrichtungsträger (40) sitzt mit geringem Spiel über seine Gleitbohrungen (45) auf den in den Querbohrungen (16) eingeklemmt sitzenden Gleitstiften (46). Um das Gehäuse (10) in Klemmrichtung (3) elastisch schwimmend am Vorrichtungsträger (40) zu zentrieren, sitzen beidseits des Vorrichtungsträgers (40) Elastomerkörper (49), die zudem auf den Gleitstiften (46) gelagert sind. Die Elastomerkörper (49) können die Form eines Torus, die Form einer gelochten Kreisscheibe oder die Form einer rechteckigen oder anderen vieleckigen ein- oder mehrfach gelochten Platte haben. Nach der Montage ragt die Adapterfläche des Vorrichtungsträgers (40) z.B. 0,1 bis 0,5 mm über die Oberseite des Gehäuses (10) über.

Jede Gehäusezone (11, 12) weist zur Aufnahme der Antriebe (60, 90) eine mehrstufige Sacklochbohrung (21) auf, deren Mittellinie (29) parallel zur Führungslängsrichtung (2) orientiert ist, vgl. Figur 3. Die Sacklochbohrung (21) setzt sich aus einer Zylinderflächenbohrung (22) und einer Keilgetriebeausnehmung (23, 24) zusammen. Im Bereich der Öffnung der Zylinderflächenbohrung (22), deren Durchmesser z.B. 22 mm misst, befindet sich ein Feingewinde und eine einen Dichtring (28) aufnehmende Nut.

An die Zylinderflächenbohrung (22) schließt sich über einen planen Gehäusebund die Keilgetriebeausnehmung (23, 24) an. Der Gehäusebund kann als Anschlag für einen Pneumatikkolben (50) dienen. Die Keilgetriebeausnehmung (23, 24) hat einen kleineren Querschnitt als die Zylinderflächenbohrung (22). Die rechte Keilgetriebeausnehmung (23) ist eine Zylinderbohrung, während die linke Keilgetriebeausnehmung (24) z.B. einen ovalen Querschnitt hat.

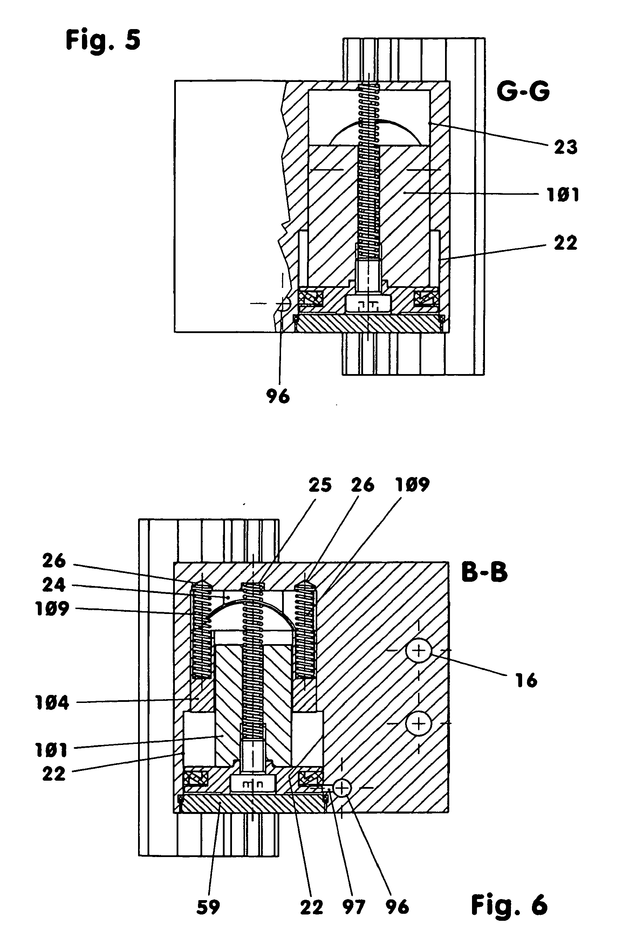

Die einzelne Keilgetriebeausnehmung (23, 24) erstreckt sich bis zur hinteren Wandung des Gehäuses (10), um dort in einer planen Bodenfläche (14) zu enden. In der Bodenfläche (14) jeder Keilgetriebeausnehmung (23, 24) befindet sich zentral eine Zylindersenkung (25) zur Positionierung einer Rückhubfeder (58). Die linke Keilgetriebeausnehmung (24) hat zwei weitere Zylindersenkungen (26), vgl. Figur 6, zur Positionierung von zwei Käfigrückhubfedern (109).

Quer zur Keilgetriebeausnehmung (23, 24) ist jeweils eine Gehemmebohrung (31) und ggf. eine Entlüftungsbohrung (27) angeordnet, vgl. Figur 4. Die Mittellinie (39) der jeweiligen Gehemmebohrung (31) kreuzt die Mittellinien (29) der Sacklochbohrungen (21) im Abstand von z.B. 1 mm, vgl. Figur 7, wobei die Mittellinien (39) der Gehemmebohrungen (31) unterhalb der Mittellinien (29) der Sacklochbohrungen (21) liegen.

Jede Gehemmebohrung (31) hat drei abgestufte Bereiche, vgl. Figur 7. Von der Gehäuseaußenseite her sind das eine Hauptbohrung (32), eine Druckstückführungsbohrung (33) und eine Austrittsbohrung (34). Die Hauptbohrung (32) schneidet sich mit der Keilgetriebeausnehmung (23, 24). In den Gehäusezonen (11, 12), siehe Figur 3, kann man die Durchdringungslinien (38) erkennen. In dem Gehäuse (10) nach den Figuren 3 bis 8 ist in jeder Gehäusezone (11, 12) jeweils ein Antrieb (60, 90) eingebaut, der hier aus einer einfach wirkenden, druckluftbetriebenen Zylinder-Kolben-Einheit (50, 63; 50, 93) und einem Schiebekeilgetriebe (70, 100) besteht.

Die Zylinder-Kolben-Einheit (50, 63; 50, 93), die beispielsweise für beide Gehäusezonen (11, 12) baugleich ist, hat z.B. einen scheibenartigen Pneumatikkolben (50) mit einer zentralen Bohrung (51), vgl. Figur 4. Die Bohrung (51) weist eine Zylindersenkung auf. Die zylindrische Außenfläche des Kolbens (50) weist eine Ringnut auf, in der ein Dichtring (54) eingesetzt ist. Die druckbeaufschlagbare Stirnfläche des Kolbens (50) trägt einen Anschlagsteg (52), der die Zylindersenkung der Bohrung (51) umgibt. Mit Hilfe des Anschlagsteges (52) kann sich das einströmende Druckmittel schnell vor der aktiven Kolbenfläche verteilen.

Auf der dem jeweiligen Schiebekeilgetriebe (70, 100) zugewandten Seite ist am Kolben (50) ein kurzer Zentrierzapfen (53) angeformt.

Anstelle des kreisrunden Querschnitts der Kolben (50) und Zylinderflächenbohrungen (22) kann der Querschnitt der Kolben (50) und der Zylinderflächenbohrungen (22) auch oval, elliptisch, polygonal oder vieleckig sein.

Dem Kolben (50) der Gehäusezone (11) dient ein Gleitschiebekeil (71) als Kolbenstange. Der Kolben (50) der Gehäusezone (12) hat einen Wälzschiebekeil (101) als Kolbenstange. Jeder Schiebekeil (71, 101) ist mit dem entsprechenden Kolben (50) über eine Zylinderschraube (55) verbunden und an dem entsprechenden Zentrierzapfen (53) zentriert. Zur Fixierung am Kolben (50) hat jeder Schiebekeil (71, 101) eine zentrale Durchgangsbohrung (72, 102), die an ihrem - dem Kolben (50) zugewandten - Ende ein Innengewinde aufweist. In jeder dieser Bohrungen (72, 102) ist eine Rückhubfeder (58) eingelegt. Diese Rückhubfedern (58) stützen sich gehäuseseitig in den Zylindersenkungen (25) der Bodenfläche (14) ab, während sie kolbenseitig jeweils an der unteren Stirnfläche der Zylinderschraube (55) anliegen.

Der Gleitschiebekeil (71) der rechten Gehäusezone (11) hat z.B. einen kreuzförmigen Querschnitt, vgl. Figur 7. Der Querschnitt weist vier Stege (73 - 76) auf. Die einander gegenüberliegenden, z.B. parallel zur Mittenlängsebene (6) ausgerichteten Führungsstege (73, 74) dienen der Führung des Gleitschiebekeils (71) in der Keilgetriebeausnehmung (23). Beide Führungsstege (73, 74) haben identische Abmessungen. Sie kontaktieren die Keilgetriebeausnehmung (23) mit ihren teilzylindermantelflächigen Führungsflächen.

Die beiden anderen Stege sind die Stützstege (75, 76). Sie sind parallel zur Klemmrichtung (3) angeordnet. Sie weisen in Klemmrichtung (3) orientierte plane Stützflächen (77, 78) auf. Die rechte Stützfläche (77), vgl. Figur 4, liegt an einem, in der Gehemmebohrung (31) eingeschraubten Einschraubdeckel (83) großflächig an. Der Einschraubdeckel (83) ist eine zylindrische Scheibe, die an der äußeren Stirnfläche Bohrungen für den Eingriff eines Zapfenschlüssels aufweist. Er hat ein Außengewinde, das in einer Ringnut endet. In der Nut ist ein Quetschring als Schraubensicherung eingelassen.

Die vom Stützsteg (75) kontaktierte Stirnfläche des Einschraubdeckels (83) ist dabei normal zur Klemmrichtung (3) ausgerichtet. Die Stützfläche (78) des linken Stützsteges (76), die an einem in der Druckstückführungsbohrung (33) gelagerten Schrägdruckstück (81) anliegt, schließt mit der Mittenlängsebene (6) einen Winkel von z.B. 5 Winkelgraden ein, wobei sich der Querschnitt des Stützsteges (76) z.B. linear in Richtung Bodenfläche (14) verjüngt. Dieser Winkel gewährleistet eine Selbsthemmung zwischen dem Gleitschiebekeil (71) und dem Schrägdruckstück (81), sofern beide Bauteile aus einer Stahllegierung bestehen und sich trocken kontaktieren.

Das Schrägdruckstück (81) ist ein zylindrischer Kolben mit einer angeformten Kolbenstange. Die Kolbenstange ragt bei betätigtem Reibgehemme (121) aus der Austrittsbohrung (34) heraus. Am Übergang der Kolbenstange zum Kolben befindet sich eine umlaufende Stirnnut, in der ein elastischer Rückhubring (82) mit z.B. rechteckigem Einzelquerschnitt sitzt.

Die Kolbenstange des Schrägdruckstücks (81) bildet zugleich eine Reibbacke (122) des Reibgehemmes (121). Die außenseitige Stirnfläche des Schrägdruckstückes (81), die beim Klemmen die Führungsschiene (7) kontaktiert, weist ggf. einen Reibbelag auf. Als Reibbelag wird beispielsweise ein pulvermetallurgisch hergestellter Reibwerkstoff auf Bronzebasis verwendet.

Nach der Figur 7 liegen die Mittellinien (29) der Schiebekeile (71, 101) bzw. deren Antriebsteile auf der mittleren Höhe der Nebenflächen (8,9) der Führungsschiene (7), sodass beim Klemmen auf die Schiebekeile (71, 101) keine Drehmomente um die Mittellinien (29) entstehen.

In der linken Gehäusezone (12), vgl. Figur 3, sitzt in der Keilgetriebeausnehmung (24) ein Käfig (104), der zwei Zylinderrollen (108) lagert. Beide Zylinderrollen (108) liegen an dem am Kolben (50) befestigten Wälzschiebekeil (101) an. Die außen liegende Zylinderrolle (108) stützt sich an einem Einschraubdeckel (113) ab, während die innenliegende Zylinderrolle (108) an einem Plandruckstück (111) anliegt.

Der Käfig (104) ist im Wesentlichen ein rohrförmiges Bauteil, dessen zentrale, rechteckige Ausnehmung (105) den Wälzschiebekeil (101) ohne Kontakt umgibt. Er ist über seine Außenkontur zumindest oben und unten mit Spiel in der Käfigsitzausnehmung (31) geführt. Quer zu dieser Ausnehmung (105) befindet sich ein ebenfalls rechteckiger Durchbruch (106). Letzterer dient der Aufnahme der Zylinderrollen (108).

Der Käfig (104) hat in den Seitenwandungen, in denen auch die Zylinderrollen (108) gelagert sind, je eine z.B. unter 10 Winkelgraden nach außen abstehende Rastzunge (107). Die Rastzungen (107) ragen in Richtung Kolben (50). Nach Figur 3 stehen die Rastzungen (107) an den Hauptbohrungen (32) an. Bei unbetätigter Klemmung werden sie dort mit Hilfe zweier Käfigrückhubfedern (109) gehalten, vgl. Figur 6. Letztere sitzen im oberen und unteren Bereich des Käfigs (104) jeweils in einer Sacklochbohrung mit z.B. planem Boden.

Der Wälzschiebekeil (101) hat einen rechteckigen Querschnitt, der sich in Richtung Bodenfläche (14) einachsig und z.B. linear verjüngt. Seine, dem Plandruckstück (111) zugewandte Keilfläche (103) schließt mit der Mittenlängsebene (6) einen Winkel von z.B. einem Winkelgrad ein.

Das Plandruckstück (111) hat mit Ausnahme seiner planen, dem Wälzkörper (108) zugewandten Stirnfläche einen zum Schrägdruckstück (81) vergleichbaren Aufbau.

Nach Figur 7 befindet sich oberhalb der Gehäusezone (11) in der Flanschzone (13) ein Zuschaltventil (150). Das Zuschaltventil (150) umfasst fünf größere Teile, ein Hauptventilglied (161), eine Hauptventilfeder (179), ein Rückschlagventilglied (182), eine Rückschlagventilfeder (184) und einen Ventildeckel (157), vgl. auch Figuren 8, 9 und 10.

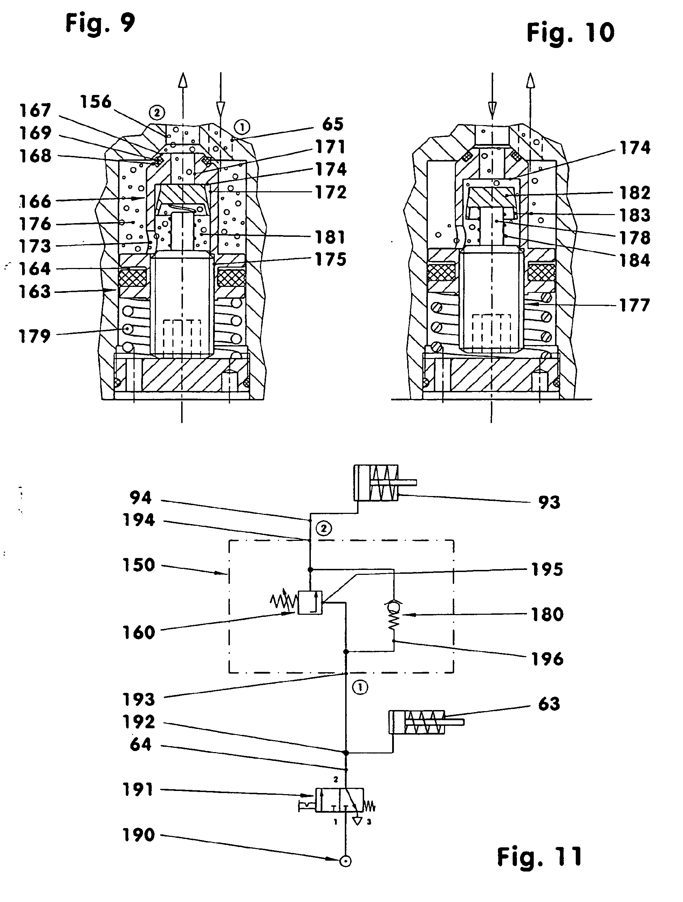

Die Figur 11 stellt einen Schaltplan dar, in dem das Zuschaltventil (150) zwei einfach wirkende Zylinder (63, 93) einer in Figur 1 gezeigten Klemmvorrichtung steuert. Beide Zylinder (63, 93) werden von einer Druckquelle (190) z.B. mit Druckluft versorgt. Vor dem ersten Zylinder (63) befindet sich ein hand- oder fühlerbetätigtes 3/2-Wegeventil (191) mit Rückhubfeder. Der Druckluftausgang des 3/2-Wegeventils (191) ist über eine erste Versorgungsleitung (64) am ersten Zylinder (63) und am Eingangsanschluss (193) des Zuschaltventils (150) angeschlossen. Ggf. ist zwischen der ersten Verzweigungsstelle (192) der Versorgungsleitung (64) und dem 3/2-Wegeventil (191) eine Drosselstelle eingebaut.

Zwischen einem Ausgangsanschluss (194) des Zuschaltventils (150) und dem zweiten Zylinder (93) ist eine zweite Versorgungsleitung (94) angeordnet.

Das Zuschaltventil (150) selbst besteht nach der Symboldarstellung aus Figur 11 aus einem modifizierten Druckminderventil (160) und einem Rückschlagventil (180). Am sogenannten Steueranschluss (195) des Druckminderventils (160) liegt die erste Versorgungsleitung (64) als Arbeitsleitung an. Vor und hinter dem Druckminderventil (160) ist eine das Ventil (160) umgehende Bypassleitung (196) angeordnet, in der ein Rückschlagventil (180) integriert ist. Das Rückschlagventil (180) öffnet die Bypassleitung (196) für Druckluft, die vom zweiten Zylinder (93) aus in Richtung 3/2-Wegeventil (191) strömt.

Nach Figur 8 sitzt das Zuschaltventil (150) in einer gestuften Sacklochbohrung (152). Die Sacklochbohrung (152) hat einen Deckelbereich (153), einen Ventilgliedbereich (154), einen Sitzbereich (155) und einen Anschlussbereich (156).

Der Ventilgliedbereich (154) stellt eine glatte zylindrische Bohrung dar, in der das Hauptventilglied (161) gelagert und geführt ist. Er hat z.B. einen Durchmesser von 16 mm. Nach hinten hin - nach Figur 8 also nach oben hin - geht er über den z.B. kegelstumpfmantelförmigen Sitzbereich (155) in den Anschlussbereich (156) über. In den Anschlussbereich (156) mündet eine vertikale Bohrung (95), die unterhalb des Anschlussbereichs (156) in eine horizontale Bohrung (96) übergeht. Die horizontale Bohrung (96) schneidet eine sichelförmige Ausfräsung (97), die von der Zylinderflächenbohrung (22) der Gehäusezone (12) aus in das Gehäuse (10) eingearbeitet ist. Die Ausfräsung (97) durchdringt die Zylinderflächenbohrung (22) direkt hinter dem Gehäusedeckel (59), vgl. Figur 6. Die Bohrungen (95, 96), die an ihren freien Enden mittels verstemmter Kugeln (69) verschlossen sind, und die Ausfräsung (97) sind reale Bestandteile der symbolisierten zweiten Versorgungsleitung (94) aus Figur 11.

Der Sitzbereich (155) hat einen Kegelwinkel von z.B. 90 Winkelgraden. Im vorderen Endbereich der Sacklochbohrung (152) schließt sich an den Ventilgliedbereich (154) ein den Ventildeckel (157) einschraubtiefeneinstellbar lagernder Deckelbereich (153) mit Feingewinde an.

Im hinteren Bereich weist der Ventilgliedbereich (154), vgl. Figuren 9 und 10 eine horizontale Zulaufbohrung (65) auf, über die bei einer Ventilbetätigung Druckmittel dem Zuschaltventil (150) zuströmt.

Das in der Ventilgliedbereich (154) sitzende Hauptventilglied (161) besteht im Wesentlichen aus einem Ventilkolben (162) und einer besonderen Stiftschraube (177). Der Ventilkolben (162) hat einen Kolbenbereich (163) und einen angeformten Schaftbereich (166). Der Kolbenbereich (163) hat eine umlaufende Ringnut (164), in der ein Dichtring (165) eingesetzt ist. Der zylindrische Schaftbereich (166), dessen Durchmesser z.B. 9 mm beträgt, ist z.B. 11 mm lang, wobei das hintere Ende eine 2*45°-Fase (167) aufweist. Die Fase (167) weist in dem Bereich, in dem sie nach Figur 8 am Sitzbereich (155) der Sacklochbohrung (152) anliegt, eine Ringnut (168) auf, in der ein Dichtring (169) sitzt.

Der zwischen dem Kolbenbereich (163) und dem Schaftbereich (166) umschlossene Raum ist der Hauptventilraum (176). In ihn mündet die Zulaufbohrung (65), unabhängig von der Stellung des Hauptventilgliedes (161). Die Zulaufbohrung (65) wird von einer vertikalen Bohrung (66) geschnitten. Das untere Ende der Bohrung (66) ragt hinter dem Gehäusedeckel (59) der Gehäusezone (11) in die Zylinderflächenbohrung (22) hinein, vgl. Figur 7. Ihr oberes Ende ist mittels einer verstemmten Kugel (69) verschlossen. Auf der Höhe und in der Flucht der horizontalen Bohrung (96) befindet sich ein Gewindeanschluss (67), der in die Bohrung (66) mündet.

Der Ventilkolben (162) weist eine zentrale Bohrung auf, die aus einem Rückströmabschnitt (171), einem Sitzabschnitt (172) und einem Gewindeabschnitt (175) besteht. Der Rückströmabschnitt (171), der z.B. einen Durchmesser von 3 mm aufweist, befindet sich im Bereich der Fase (167). Der Sitzabschnitt (172), der einen planen Boden (174) aufweist und einen Durchmesser von z.B. 7 mm hat, ist im Schaftbereich (166) des Ventilkolbens (162) angeordnet. Der Gewindeabschnitt (175) befindet sich im Kolbenbereich (163).

Im Gewindeabschnitt (175) ist die Stiftschraube (177) gasdicht und ggf. verstellbar eingeschraubt. Soll Letztere verstellbar sein, wird sie im Gewindeabschnitt (175) mittels Lack gesichert. Ansonsten ist sie im Gewindeauslauf des Gewindeabschnitts (175) verklemmt. Die Stiftschraube (177) weist an ihrem vorderen Ende einen Zylinderstift (178) auf, während sie an ihrer hinteren Stirnseite z.B. eine Innensechskantausnehmung hat. Der Zylinderstift (178) hat einen Durchmesser von 5,6 mm.

Zwischen dem Zylinderstift (178) und dem planen Boden (174) des Sitzabschnitts (172) ist ein Rückschlagventilglied (182) angeordnet. Der Boden (174) und die diesem zugewandte Stirnfläche des Zylinderstifts (178) dienen als Anschläge für das Rückschlagventilglied (182). Dieses Ventilglied (182) ist z.B. ein im Wesentlichen kegelstumpfartiger Elastomerkörper mit einer planen Sitzfläche und einer schürzenartigen, umlaufenden Dichtlippe (183). Die plane Sitzfläche wird bei geschlossenem Rückschlagventil (180) mittels einer auf dem Zylinderstift (178) geführten Rückschlagventilfeder (184) zum Verschließen des Rückströmabschnitts (171) gegen den Boden (174) gepresst.

Selbstverständlich kommt das Rückschlagventil (180) auch ohne die Rückschlagventilfeder (184) aus. Auch kann das Rückschlagventilglied (182) die Form einer Kugel haben.

Der Raum, in dem sich das Rückschlagventilglied (182) bewegen kann, ist der Rückschlagventilraum (181). Er kommuniziert mit dem Hauptventilraum (176) - unabhängig von der Stellung des Rückschlagventilglieds (182) - mittels einer im Sitzabschnitt (172) angeordneten, z.B. radialen Querbohrung (173).

Zwischen dem Ventildeckel (157) und dem Kolbenbereich (163) des Ventilkolbens (162) ist in dem Ventilgliedbereich (154) die Rückhubfeder (179) angeordnet. Der eingeschraubte Ventildeckel (157) weist an seiner Umfangsfläche eine Ringnut auf, in der zur Positionssicherung des Ventildeckels (157) ein Kunststoffquetschring (158) sitzt. Zum Verschrauben des Ventildeckels (157) besitzt dieser z.B. zwei stirnseitige Bohrungen zum Ansetzen eines Werkzeugs. Mindestens eine der Bohrungen ist eine Durchgangsbohrung (159).

Um nach Figur 11 den Kolben des ersten Zylinders (63) ausfahren zu lassen, wird das 3/2-Wegeventil (191) betätigt. Die Druckluft steht somit am ersten Zylinder (63) und am modifizierten Druckminderventil (160) an. Nach Figur 7 liegt am Gewindeanschluss (67) Druckluft an. Solange der erste Zylinder (63) befüllt wird, bleibt der Druck der Druckluft unterhalb eines Schwellwertes, der z.B. bei 4,5 * 10⁵ Pa liegt. Mit dem Kolben (50) bewegt sich der Gleitschiebekeil (71) nach hinten. Hierbei drückt er das Schrägdruckstück (81) gegen die Führungsschiene (7). Sobald sich die Reibbacke (122) des Schrägdruckstückes (81) an der Nebenfläche (9) der Führungsschiene (7) angelegt hat, schiebt das Schrägdruckstück (81) das Gehäuse (10) gegenüber dem Vorrichtungsträger (40) - unter einem elastischen Komprimieren der linken Elastomerkörper (49) - nach rechts, bis sich die Reibbacke (132) der Gehäusezone (12) an der Nebenfläche (8) anlegt. Spätestens dann blockiert der Kolben (50) im ersten Zylinder (63).

Daraufhin übersteigt der Druck der Druckluft im Hauptventilraum (176) den Schwellwert. Das Hauptventilglied (161) wird - unter Öffnen - nach unten verschoben. Nach den Figuren 8 und 9 strömt die Druckluft über den Anschlussbereich (156) in die Bohrungen (95, 96) und in die Ausfräsung (97) und gelangt somit vor den Pneumatikkolben (50) der Gehäusezone (12). Der Kolben (50) verschiebt den Wälzschiebekeil (101) gegen die Federkraft der Rückhubfeder (58) nach hinten. Der Wälzschiebekeil (101) klemmt das Plandruckstück (111) mit großer Klemmkraft gegen die Führungsschiene (7). Der Schlitten (1) ist somit am Maschinenbett (5) blockiert.

Zum Entlasten der Zylinder (63, 93) wird das 3/2-Wegeventil (191) wieder in die, in Figur 11 dargestellte Position gebracht. Der Luftdruck im Hauptventilraum (176) fällt unter den Schwellwert. Das Hauptventilglied (161) verschließt den Anschlussbereich (156), indem das Hauptventilglied (161) auf dem kegelstumpfförmigen Sitzbereich (155) dichtend aufsitzt, vgl. Figur 10. Da der Luftdruck im Hauptventilraum (176) und somit auch im Rückschlagventilraum (181) weiterhin fällt, öffnet das Rückschlagventil (180). Das Rückschlagventilglied (182) hebt gegen die Kraftwirkung der Rückschlagventilfeder (184) vom Boden (174) ab. Zugleich verliert die Dichtlippe (183) des Rückschlagventilglieds (182) zumindest großteils den Kontakt zur Wandung des Sitzabschnitts (172). Der noch im zweiten Zylinder (93) vorhandene Überdruck strömt über das Rückschlagventil (180) und die Bohrungen (65, 66) in den Gewindeanschluss (67) und von dort über eine nicht dargestellte Leitung zum 3/2-Wegeventil (191), um dort ins Freie entlüftet zu werden, vgl. Figur 11.

Sobald die auf das Rückschlagventilglied (182) wirkende Öffnungskraft des Gasdrucks der Bohrungen (95, 96) kleiner ist als die Schließkraft der Rückschlagventilfeder (184), schließt sich das Rückschlagventil (180) wieder, vgl. Figuren 8 und 11. Somit ist gewährleistet, dass sich die Reibbacken (122, 132) wieder von der Führungsschiene (7) lösen. Zugleich zentriert sich das Gehäuse (10) mittels der Elastomerringe (49) wieder am Vorrichtungsträger (40).

Bei einem Rückschlagventil (180) ohne Rückschlagventilfeder (184) fällt der Druck im Zylinder (93) auf den Umgebungsdruck ab.

Die Figur 2 zeigt eine vergleichbare Vorrichtung mit zwei baugleichen, elektromagnetischen Antriebsvorrichtungen (62, 92). Durch die nichtpneumatische Antriebsvorrichtung kann das Gehäuse (10) wegen des Wegfalls des Zuschaltventils mit geringerer Höhe gebaut werden. Allerdings haben die einzelnen Antriebsvorrichtungen (62, 92) ein größeres Volumen und eine größere Masse. Aufgrund des großen Volumens werden sie außen am Gehäuse (10) angeflanscht.

Jede Antriebsvorrichtung (62, 92) ist ein Hubmagnet (140) mit Schubanker. Der einzelne Hubmagnet (140) hat ein rohrförmiges Gehäuse (141), das an seiner vorderen Stirnseite einen Gewindeansatz (142) aufweist. Aus dem Gewindeansatz (142) ragt zentral eine Schubstange (143) eines nicht dargestellten Schubankers heraus. Auf dem freien Ende der Schubstange (143) ist eine z.B. büchsenförmige Kappe (144) aufgeschrumpft. Ihre vordere, plane Stirnfläche liegt am jeweiligen Schiebekeil (71, 101) der einzelnen Antriebe (60, 90) an. Die rückseitige, dem Gewindeansatz (142) zugewandte, ringförmige und plane Stirnseite der Kappe (144) dient als hinterer Anschlag für die Schubstange (143).

Zur Befestigung des Hubmagneten (140) am Gehäuse (10) weist jede Zylinderflächenbohrung(22) ein Gewinde auf, in das ein flanschartiger Doppelschraubadapter (145) eingeschraubt ist. Der Doppelschraubadapter (145) ist auf dem Gewindeansatz (142) aufgeschraubt.

Die in den Schiebekeilen (71, 101) geführten Rückhubfedern (58) haben als schiebekeilseitige Abstützung jeweils einen Gewindestift (55), mit dessen Hilfe die Vorspannung der Rückhubfedern (58) bei Bedarf eingestellt werden kann. Ggf. kann auf die Gewindestifte (55) verzichtet werden, wenn die durchgehenden Bohrungen (72, 102) der Schiebekeile (71, 101) durch Sacklochbohrungen ersetzt werden.

Bei dieser Variante müssen während des Klemmens oder Greifens beide Hubmagnete (140) bestromt werden. Um z.B. die damit verbundene Erwärmung zu vermeiden, kann die gezeigte Konstruktion wie folgt modifiziert werden:
Der Hubmagnet (140) der Gehäusezone (12) wird durch einen Doppelhubmagnet ersetzt. Die Kappe (144) der Schubstange (143) und der Gewindestift (55) werden als einteiliges Bauteil ausgeführt, sodass die Schubstange (143) mit dem Schiebekeil (101) eine Einheit bildet. Auf die Rückhubfeder (58) des Schiebekeils (101) wird verzichtet. Zudem wird die bisher einteilige und plane Keilfläche (103) aus zwei Flächen zusammengesetzt. Die vorderen zwei Drittel behalten den Keilwinkel von z.B. 1 Winkelgrad bei. Zur Kappe (144) hin schließt sich als weitere Fläche eine Plateaufläche an, die parallel zu der ihr gegenüberliegenden Stirnfläche des Plandruckstückes (111) ausgerichtet ist.

Des Weiteren werden die Druckstücke (81, 111) so dimensioniert, dass beide Reibbacken (122, 132) gerade an der Führungsschiene (7) zur Anlage kommen, wenn der Gleitschiebekeil (71) - entgegen der Darstellung nach Figur 4 - an der Bodenfläche (14) anstößt. Wird nun der Wälzschiebekeil (101) in Richtung Bodenfläche (14) verschoben, gelangt die innere Zylinderrolle (108), nach dem Erreichen der erforderlichen Klemmkraft und dem Anschlagen des Wälzschiebekeils (101) an der Bodenfläche (14), sicher auf die Plateaufläche.

Nun werden beide Hubmagnete (140) stromlos geschaltet. Die Klemmung bleibt erhalten, da in der Gehäusezone (12) aufgrund der Plateaufläche des Wälzschiebekeils (101) auf das Wälzschiebekeilgetriebe (100) keine resultierende Kraft in Richtung der Führungslängsrichtung (2) vorhanden ist. Das Gleitschiebekeilgetriebe (70) verharrt trotz der gespannten Rückhubfeder (58) der Gehäusezone (11) in seiner Klemmposition, da es (70) sich im Bereich der Selbsthemmung befindet.

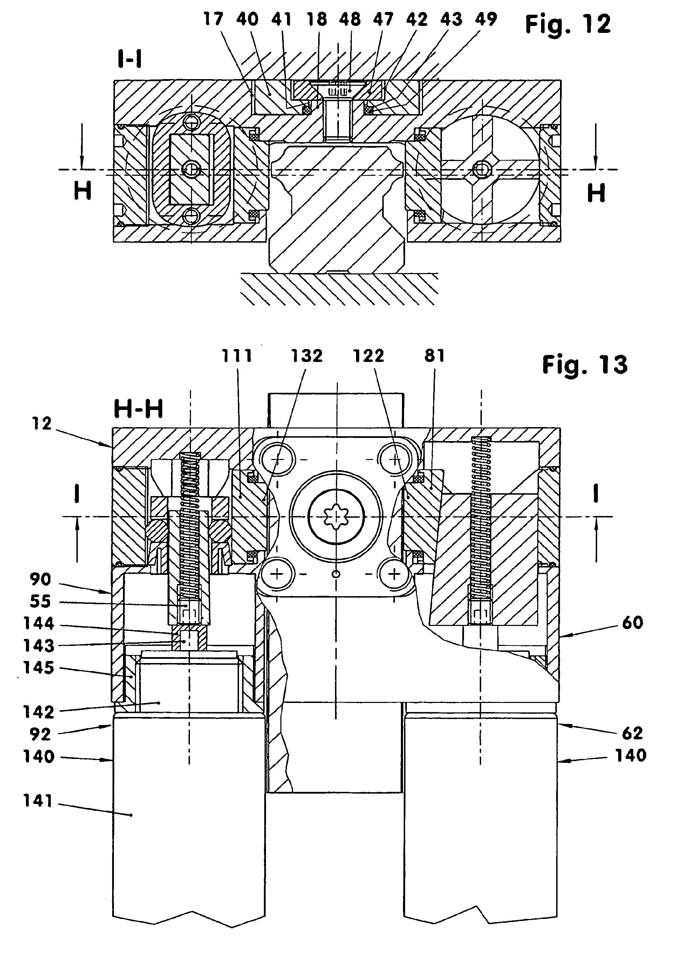

Die Klemmwirkung wird erst dann wieder aufgehoben, wenn im Doppelhubmagnet der Gehäusezone (12) diejenige Spule bestromt wird, die die Schubstange (143) und somit auch den Wälzschiebekeil (101) zurückzieht. Durch die Entlastung der Klemmung entfällt die Klemmkraft im Gleitschiebekeilgetriebe (70) der Gehäusezone (11), wodurch die Rückhubfeder (58) den Gleitschiebekeil (71) und die Schubstange (143) wieder in die in Figur 13 gezeigte Position zurückschiebt.

Das Gehäuse (10) hat bei der Variante nach den Figuren 2, 12 und 13 einen plattenförmigen, großflächigen Vorrichtungsträger (40). Er besteht aus einer rechteckigen oder quadratischen Platte, die an ihren Ecken je eine Gewindebohrung (44) zur Befestigung am Schlitten (1) aufweist. Mittig ist in die Platte von oben her eine Durchgangsbohrung (41) mit einer großen Zylindersenkung (42) eingearbeitet, in der eine Scheibe (47) platziert ist, die z.B. mittels einer Senkschraube (48) am Gehäuse (10) befestigt ist. An der Unterseite der Vorrichtungsträger (40) ist, um die zentrale Durchgangsbohrung (41) herum, eine kleinere Zylindersenkung (43) zur Aufnahme eines ring- bzw. torusförmigen Elastomerkörpers (49) angeordnet.

Der Vorrichtungsträger (40) sitzt in einer rechteckigen Ausnehmung (17) des Gehäuses (10). Im Zentrum der Ausnehmung (17) befindet sich ein zentraler, aufgebohrter Zapfen (18) mit planer Stirnfläche und Innengewinde. Der Außendurchmesser des Zapfens (18) ist im z.B. 2 mm kleiner als der Innendurchmesser der zentralen Durchgangsbohrung (41) an ihrer engsten Stelle. Zwischen dem Zapfen (18) und der kleineren Zylindersenkung (43) ist der Elastomerkörper (49) eingeklemmt. Der Außendurchmesser der Scheibe (47) ist ebenfalls z.B. 2 mm kleiner als der Innendurchmesser der großen Zylindersenkung (42) der Platte.

Der Vorrichtungsträger (40) hat in der Ausnehmung (17) in Klemmrichtung (3) ein Spiel von z.B. 2 mm. In Führungslängsrichtung (2) ist das Spiel gerade so groß, dass sich der Vorrichtungsträger (40) in Klemmrichtung (3) noch ohne Klemmen verschieben lässt. Der zwischen dem Vorrichtungsträger (40) und dem Gehäuse (10) angeordnete Elastomerkörper (49) drückt den Vorrichtungsträger (40) mit dem planen Grund der Zylindersenkung (42) gegen die ebenfalls plane Unterseite der Scheibe (47), sodass der Vorrichtungsträger (40) ca. 0,1 bis 0,5 mm über das Niveau der Oberseite des Gehäuses (10) übersteht.

### Bezugszeichenliste:

- 1: Schlitten
- 2: Führungslängsrichtung, Schlittenbewegung
- 3: Klemmrichtung
- 5: Maschinenbett
- 6: vertikale Mittenlängsebene
- 7: Schiene, Führungsschiene
- 8, 9: Nebenflächen

- 10: Grundkörper, c- bzw. u-förmig
- 11: Gehäusezone, rechts
- 12: Gehäusezone, links
- 13: Flanschzone
- 14: Bodenfläche
- 15: Langloch
- 16: Querbohrungen
- 17: Ausnehmung, rechteckig
- 18: Zapfen
- 19: Nut, zentral

- 21: Sacklochbohrungen
- 22: Zylinderflächenbohrung
- 23: Keilgetriebeausnehmung, rechts
- 24: Keilgetriebeausnehmung, links
- 25: Zylindersenkungen, zentral
- 26: Zylindersenkungen, dezentral
- 27: Entlüftungsbohrung
- 28: Dichtringe
- 29: Mittellinie

- 31: Gehemmebohrungen
- 32: Hauptbohrungen
- 33: Druckstückführungsbohrungen, Führungen
- 34: Austrittsbohrungen
- 38: Durchdringungslinien
- 39: Mittellinien

- 40: Vorrichtungsträger
- 41: Durchgangsbohrung
- 42: Zylindersenkung, groß
- 43: Zylindersenkung, klein
- 44: Gewindebohrungen
- 45: Gleitbohrungen
- 46: Gleitstifte
- 47: Scheibe
- 48: Senkschraube
- 49: Elastomerkörper, ringförmig

- 50: Pneumatikkolben, Kolben
- 51: Bohrung, zentral
- 52: Anschlagsteg
- 53: Zentrierzapfen
- 54: Dichtring
- 55: Zylinderschraube, Gewindestift
- 58: Rückhubfeder
- 59: Gehäusedeckel

- 60: Antrieb, erster, rechts
- 61: Antriebsvorrichtung, erste, pneumatisch
- 62: Antriebsvorrichtung, erste, elektromagnetisch
- 63: Zylinder, erster
- 64: Versorgungsleitung, erste
- 65: Zulaufbohrung, horizontal
- 66: Bohrung, vertikal
- 67: Gewindeanschluss
- 69: Kugeln

- 70: Gleitschiebekeilgetriebe
- 71: Gleitschiebekeil, Schiebekeil, Kolbenstange
- 72: Bohrung, Durchgangsbohrung
- 73, 74: Führungsstege
- 75, 76: Stützstege
- 77: Stützfläche, rechts
- 78: Stützfläche, links

- 81: Schrägdruckstück, Klemm- oder Greifelement
- 82: Rückhubring
- 83: Einschraubdeckel

- 90: Antrieb, zweiter, links
- 91: Antriebsvorrichtung, zweite, pneumatisch
- 92: Antriebsvorrichtung, zweite, elektromagnetisch
- 93: Zylinder, zweiter
- 94: Versorgungsleitung, zweite
- 95: Bohrung, vertikal
- 96: Bohrung, horizontal
- 97: Ausfräsung

- 100: Wälzschiebekeilgetriebe
- 101: Wälzschiebekeil, Schiebekeil, Kolbenstange
- 102: Bohrung, Durchgangsbohrung
- 103: Keilfläche
- 104: Käfig
- 105: Ausnehmung
- 106: Durchbruch
- 107: Rastzungen
- 108: Wälzkörper, Zylinderrollen
- 109: Käfigrückhubfedern
- 111: Plandruckstück, Klemm- oder Greifelement
- 112: Rückhubring
- 113: Einschraubdeckel

- 121: Reibgehemme, rechts
- 122: Reibbacke
- 131: Reibgehemme, links
- 132: Reibbacke

- 140: Hubmagnet, Antriebsvorrichtung
- 141: Gehäuse
- 142: Gewindeansatz
- 143: Schubstange
- 144: Kappe
- 145: Doppelschraubadapter

- 150: Zuschaltventil, Folgeventil
- 152: Sacklochbohrung
- 153: Deckelbereich
- 154: Ventilgliedbereich
- 155: Sitzbereich, kegelstumpfmantelförmig, Kegelsitz
- 156: Anschlussbereich
- 157: Ventildeckel
- 158: Kunststoffquetschring
- 159: Durchgangsbohrung

- 160: Druckminderventil, modifiziert
- 161: Hauptventilglied
- 162: Ventilkolben
- 163: Kolbenbereich
- 164: Ringnut
- 165: Dichtring
- 166: Schaftbereich
- 167: Fase
- 168: Ringnut von (167)
- 169: Dichtring von (167)

- 171: Rückströmabschnitt
- 172: Sitzabschnitt
- 173: Querbohrung, radial
- 174: Boden, plan
- 175: Gewindeabschnitt
- 176: Hauptventilraum
- 177: Stiftschraube
- 178: Zylinderstift
- 179: Hauptventilfeder, Rückhubfeder

- 180: Rückschlagventil
- 181: Rückschlagventilraum
- 182: Rückschlagventilglied, Elastomerkörper
- 183: Dichtlippe
- 184: Rückschlagventilfeder

- 190: Druckquelle
- 191: 3/2-Wegeventil
- 192: Verzweigungsstelle, erste
- 193: Eingangsanschluss
- 194: Ausgangsanschluss
- 195: Steueranschluss
- 196: Bypassleitung

## Patentansprüche

1. Vorrichtung zum Bremsen, Klemmen oder Greifen mit mindestens einem ersten (60) und mindestens einem zweiten jeweils eine Hub- oder Schwenkbewegung erzeugenden Antrieb (90), wobei jeder Antrieb (60, 90) mindestens eine Antriebsvorrichtung (61, 91; 62, 92) und mindestens ein Getriebe (70, 100) umfasst,
**dadurch gekennzeichnet,**
- **dass** das Getriebe (70) des ersten Antriebs (60) - zur Erzeugung einer Zustellbewegung - eine kleine Übersetzung hat, während das Getriebe (100) des zweiten Antriebs (90) - zur Erzeugung einer großen Brems-, Klemm- oder Greifkraft - eine größere Übersetzung hat und
- **dass** der erste Antrieb (60) vor dem zweiten Antrieb (90) betätigbar ist.

2. Vorrichtung gemäß Anspruch 1, **dadurch gekennzeichnet, dass** die Übersetzung des zweiten Antriebs (90) um mindestens 33 Prozent größer ist als die des ersten Antriebs (60).

3. Vorrichtung gemäß Anspruch 1, **dadurch gekennzeichnet, dass** die Getriebe (70, 100) Schiebekeilgetriebe sind, wobei das Schiebekeilgetriebe (70) des ersten Antriebs (60) einen Keilwinkel hat, der zwischen 3 und 8 Winkelgraden liegt, wobei das Schiebekeilgetriebe (100) des zweiten Antriebs (90) einen Keilwinkel hat, der zwischen 0,5 und 2 Winkelgraden liegt.

4. Vorrichtung gemäß Anspruch 3, **dadurch gekennzeichnet, dass** sie mindestens zwei bewegliche Klemm- oder Greifelemente (81, 111) aufweist, die jeweils mindestens einem Schiebekeilgetriebe (70, 100) nachgeordnet sind, wobei die Klemm- oder Greifelemente (81, 111) an einer Führungsschiene (7) oder einem Werkstück durch gegenseitige Relativbewegungen klemmend oder greifend anlegbar sind.

5. Vorrichtung gemäß Anspruch 3, **dadurch gekennzeichnet, dass** die auf die Klemm- oder Greifelemente (81, 111) wirkende Hub- oder Schwenkbewegung des ersten Antriebs (60) um mindestens 33 Prozent größer ist als die des zweiten Antriebs (90).

6. Vorrichtung gemäß Anspruch 3, **dadurch gekennzeichnet, dass** das Schiebekeilgetriebe (70) des ersten Antriebs (60) ein Gleitkeilgetriebe ist, während das Schiebekeilgetriebe (100) des zweiten Antriebs (90) ein Wälzkeilgetriebe ist.

7. Vorrichtung gemäß Anspruch 1, **dadurch gekennzeichnet, dass** der zweite Antrieb (90) betätigbar ist, sobald der erste Antrieb (60) mindestens 60 Prozent seiner realen Hub- oder Schwenkbewegung durchgeführt hat.

8. Vorrichtung gemäß Anspruch 1, **dadurch gekennzeichnet, dass** die Führungen (33) der Klemm- oder Greifelemente (81) des einen Antriebs (60) mit den Führungen der Klemm- oder Greifelemente (111) des anderen Antriebs (90) fluchten.

9. Vorrichtung gemäß Anspruch 1, **dadurch gekennzeichnet, dass** die Antriebsvorrichtungen (61, 91; 62, 92) des ersten (60) und des zweiten Antriebs (90) baugleich sind.

10. Vorrichtung gemäß Anspruch 1, **dadurch gekennzeichnet, dass** die Antriebsvorrichtungen Zylinder-Kolben-Einheiten (61, 91), Elektromagnete (62, 92), elektromechanische Antriebe, piezoelektrische Antriebe oder thermische Gedächtnismetallantriebe sind.

11. Funktionsablauf einer Vorrichtung zum Bremsen, Klemmen oder Greifen mit mindestens einem ersten (60) und mindestens einem weiteren jeweils eine Hub- oder Schwenkbewegung erzeugenden Antrieb (90),
- wobei jeder Antrieb (60, 90) mindestens eine Antriebsvorrichtung (61, 91; 62, 92) und mindestens ein Getriebe (70, 100) umfasst,
- wobei das Getriebe (70) des ersten Antriebs (60) eine Übersetzung hat, die kleiner ist als die Übersetzung des Getriebes (100) eines weiteren Antriebs (90),
- wobei mindestens einer der weiteren Antriebe (90) mit der Brems-, Klemm- oder Greifbewegung erst dann beginnt, wenn der erste Antrieb (60) seine Brems-, Klemm- oder Greifbewegung zu mindestens 60 Prozent bewältigt hat, und
- wobei alle Antriebe (60, 90) nach dem Erzeugen der Brems-, Klemm- oder Greifkraft und während des Haltens derselben entweder zeitgleich mit Energie versorgt oder zeitgleich abgeschaltet werden.

## Claims

1. Apparatus for braking, clamping or gripping comprising at least one first drive mechanism (60) and at least one second drive mechanism (90), said drive mechanisms (60, 90) adapted to produce lifting or pivoting movements and each including at least one drive unit (61, 91; 62, 92) and at least one transmission (70, 100),
**characterized in that**
- transmission (70) of first drive mechanism (60) has - for producing an advancing movement - a low transmission ratio whereas transmission (100) of second drive mechanism (90) has
- for generating a high braking, clamping or gripping force - a higher transmission ratio, and **in that**
- first drive mechanism (60) is adapted to be actuated before second drive mechanism (90).

2. Apparatus as claimed in claim 1, **characterized in that** the transmission ratio of second drive mechanism (90) is at least 33 percent higher than the transmission ratio of first drive mechaism (60).

3. Apparatus as claimed in claim 1, **characterized in that** transmissions (70, 100) comprise pushed-wedge-type transmissions, where pushed-wedge-type transmission (70) of first drive means (60) has a wedge angle between 3 and 8 degrees and sliding-edge-type transmission (100) of second drive (90) has a wedge angle between 0.5 and 2 degrees.

4. Apparatus as claimed in claim 3, **characterized by** including at least two movable clamping or gripping elements (81, 111) each following at least one pushed-wedge-type transmission (70, 100), said clamping or gripping elements (81, 111) adapted to perform oppositely directed relative movements to clampingly or grippingly engage a guide rail (7) or a workpiece.

5. Apparatus as claimed in claim 3, **characterized in that** the lifting or pivoting movements produced by first drive mechnism (60) and acting on clamping or gripping elements (81, 111) are at least 33 percent larger than those performed by second drive means (90).

6. Apparatus as claimed in claim 3, **characterized in that** pushed-wedge-type transmission (70) of first drive mechanism (60) comprises a sliding-wedge-type transmission whereas pushed-wedge-type transmission (100) of second drive mechanism (90) comprises a rolling-contact-type transmission.

7. Apparatus as claimed in claim 1, **characterized in that** second drive mechanism (90) is adapted to be actuated as soon as first drive mechanism (60) has completed at least 60 percent of its real lifting or pivoting movement.

8. Apparatus as claimed in claim 1, **characterized in that** guide members (33) of clamping or gripping elements (81) of one (60) of said drive mechanisms are aligned with the guides of the clamping or gripping elements (111) of the other said drive mechanism (90).

9. Apparatus as claimed in claim 1, **characterized in that** drive units (61, 91; 62, 92) of first and second drive mechanisms (90) are similar in construction.

10. Apparatus as claimed in claim 1, **characterized in that** said driving units comprise cylinder-piston units (61, 91), electromagnets (62, 92), piezoelectric units or thermal memory-metal mechanisms.

11. Functional sequence of apparatus for braking, clamping or gripping and comprising at least one first drive mechanism (60) and at least one more drive mechanism (90), each said drive mechanisms producing a lifting or pivoting movement, wherein
- each drive mechanism (60, 90) comprises at least one drive unit (61, 91; 62, 92) and at least one transmission (70, 100);
- transmission (70) of first drive mechanism (60) has a transmission ratio lower than the transmission ratio of a transmission (100) of a further drive mechanism (90);
- at least one (90) of said further drive mechanisms does not begin its braking, clamping or gripping movement until first drive mechanism (60) has completed at least 60 percent of its braking, clamping or gripping movement; and
- all drive mechanisms (60, 90) are either energized simultaneously or de-energized simultaneously after the braking, clamping or gripping force has been generated and is being held.

## Revendications

1. Dispositif de freinage, de serrage ou de préhension équipé au moins d'un premier système d'entraînement (60) et au moins d'un deuxième système d'entraînement (90) produisant chacun un mouvement de levage ou un mouvement de pivotement, chaque système d'entraînement (60, 90) comprenant au moins un dispositif d'entraînement (61, 91; 62, 92) et au moins un engrenage (70, 100),
**caractérisé en ce**
- **que** l'engrenage (70) du premier système d'entraînement (60) a un petit rapport de multiplication pour produire un mouvement d'avance, alors que l'engrenage (100) du deuxième système d'entraînement (90) a un rapport de multiplication plus grand pour produire une grande force de freinage, de serrage ou de préhension et
- **que** le premier système d'entraînement (60) peut être actionné avant le deuxième système d'entraînement (90).

2. Dispositif selon la revendication 1, **caractérisé en ce que** la multiplication du deuxième système d'entraînement (90) est plus grande d'au moins 33 pourcent que celle du premier système d'entraînement (60).

3. Dispositif selon la revendication 1, **caractérisé en ce que** les engrenages (70, 100) sont des engrenages à clavette coulissante, l'engrenage à clavette coulissante (70) du premier système d'entraînement (60) ayant un angle de coin entre 3 et 8 degrés et l'engrenage à clavette coulissante (100) du deuxième système d'entraînement (90) ayant un angle de coin entre 0,5 et 2 degrés.

4. Dispositif selon la revendication 3, **caractérisé en ce qu'**il présente au moins deux éléments mobiles de serrage ou de préhension (81, 111) qui sont disposés chacun derrière au moins un engrenage à clavette coulissante (70, 100), les éléments de serrage ou de préhension (81, 111) pouvant s'appliquer contre un rail de guidage (7), par des mouvements relatifs réciproques, par serrage ou par accrochage.

5. Dispositif selon la revendication 3, caractérisé en ce le mouvement de levage ou de pivotement du premier système d'entraînement (60) qui agit sur les éléments de serrage ou de préhension (81, 111) est plus grand d'au moins 33 pourcent que celui du deuxième système d'entraînement (90).

6. Dispositif selon la revendication 3, **caractérisé en ce que** l'engrenage à clavette coulissante (70) du premier système d'entraînement (60) est un réducteur harmonique alors que l'engrenage à clavette coulissante (100) du deuxième système d'entraînement (90) est un engrenage muni de coins à roulement.

7. Dispositif selon la revendication 1, **caractérisé en ce que** le deuxième système d'entraînement (90) peut être actionné dès que le premier système d'entraînement (60) a effectué au moins 60 pourcent de son mouvement réel de levage ou de pivotement.

8. Dispositif selon la revendication 1, **caractérisé en ce que** les guides (33) des éléments de serrage ou de préhension (81) d'un système d'entraînement (60) sont alignés avec les guides des éléments de serrage et de préhension (111) de l'autre système d'entraînement (90).

9. Dispositif selon la revendication 1, **caractérisé en ce que** les dispositifs d'entraînement (61, 91; 62, 92) du premier système d'entraînement (60) et du deuxième système d'entraînement (90) sont de construction identique.

10. Dispositif selon la revendication 1, **caractérisé en ce que** les dispositifs d'entraînement sont des unités cylindre-piston (61, 91), des aimants électromagnétiques (62, 92), des entraînements électromécaniques, des entraînements piézoélectriques ou des entraînements métalliques à effet mémoire thermique.

11. Déroulement des fonctions d'un dispositif de freinage, de serrage ou de préhension équipé au moins d'un premier système d'entraînement (60) et au moins d'un deuxième système d'entraînement (90) produisant chacun un mouvement de levage ou un mouvement de pivotement,
- chaque système d'entraînement comprenant au moins un dispositif d'entraînement (61, 91; 62, 92) et au moins un engrenage (70, 100),
- l'engrenage (70) du premier système d'entraînement (60) ayant un rapport de multiplication plus petit que le rapport de multiplication (100) d'un autre engrenage (90),
- au moins un des autres engrenages (90) ne commençant le mouvement de freinage, de serrage ou de préhension que lorsque le premier système d'entraînement (60) a accompli au moins 60 pourcent de son mouvement de freinage, de serrage ou de préhension, et
- tous les engrenages (60, 90) étant alimentés en énergie en même temps ou arrêtés en même temps après la production et pendant le maintien de la force de freinage, de serrage ou de préhension.
